# EUROPÄISCHE PATENTSCHRIFT

(11) **EP 2 820 187 B1**
(45) Veröffentlichungstag und Bekanntmachung des Hinweises auf die Patenterteilung: **09.08.2017**
(21) Anmeldenummer: 13712490.5
(22) Anmeldetag: 26.02.2013
(51) Int. Cl.: G01K 1/02, G01K 13/08, D21F 3/06, D21F 3/08, D21G 1/02, D21F 5/18, G01L 1/24, G01L 5/00

(54) **MASCHINE ZUR HERSTELLUNG EINER FASERSTOFFBAHN**
MACHINE FOR PRODUCING A FIBER WEB
MACHINE DE PRODUCTION D'UNE BANDE FIBREUSE

(30) Priorität: 28.02.2012 DE 102012203035
(43) Veröffentlichungstag der Anmeldung: 07.01.2015
(73) Patentinhaber: Voith Patent GmbH, 89522 Heidenheim (DE)
(72) Erfinder: AENGENEYNDT, Kerst, 89428 Syrgenstein (DE); BREINEDER, Martin, A-2620 Natschbach (AT); BISCHOF, Hubert, A-8680 Mürzzuschlag (AT); SCHMITT, Mathias, 81476 München (DE)
(86) Internationale Anmeldenummer: PCT/EP2013/053793
(87) Internationale Veröffentlichungsnummer: WO 2013/127777

(56) Entgegenhaltungen:
- WO-A1-96/25288
- WO-A1-2010/034321
- WO-A1-2012/113747

## Beschreibung

Die Erfindung betrifft eine Maschine zur industriellen Herstellung einer Faserstoffbahn, insbesondere einer Hygienepapier- bzw. Tissuebahn. Zur Formierung einer Faserstoffbahn wird in der industriellen Papierherstellung zunächst eine Suspension auf einen Träger wie z. B. ein Sieb aufgebracht und erstentwässert. Die Entwässerung wird im Anschluss an die Blattbildung in nachfolgenden Sektionen der Maschine fortgeführt, bis schließlich eine selbsttragende Faserstoffbahn produziert wird. Während des Entwässerungsprozesses wird die noch nicht selbsttragende Faserstoffbahn in der Regel an andere Träger, beispielweise Filze oder andere Siebe übergeben. In der Nasspartie einer Maschine wird die Faserstoffbahn mit dem sie jeweils stützenden Träger durch eine Reihe von Walzenspalten geführt, in welchen die Faserstoffbahn gepresst bzw. unter Druck gesetzt wird. Das sich in den Walzenspalten ausbildende Druckprofil hat einen wesentlichen Einfluss auf die Effizienz, mit der die Faserstoffbahn entwässert und geglättet wird. Bei ungleichmäßiger Druckverteilung im Walzenspalt weist die Faserstoffbahn ein ungleichmäßiges Feuchteprofil bzw. unzureichende Glättung auf. Papierhersteller sind daher darauf bedacht, die Druckprofile in den Walzenspalten zu überwachen.

Die verwendeten Walzen weisen üblicherweise einen Walzenkern, welcher die Belastung aufnimmt, auf. Je nachdem in welcher Phase des Produktionsprozesses die Faserstoffbahn bearbeitet wird, müssen die mit dieser in Kontakt tretenden Oberflächen der Walzen verschiedene Eigenschaften aufweisen. Daher sind die Walzen in dem Bereich der Umfangsfläche der Walze, der mit der Faserstoffbahn in Kontakt kommt, in der Regel mit einem sogenannten Walzenbezug versehen, der die jeweils gewünschten Eigenschaften aufweist. Dabei kann der Walzenbezug auch mehrschichtig aufgebaut sein.

Zur Überwachung des Druckprofils im Walzenspalt während des laufenden Betriebs können Sensoren eingesetzt werden. Dies ist beispielsweise in der Schrift WO 96/25288 beschrieben. Üblicherweise sind die Sensoren auf der äußeren Mantelfläche des Walzenkerns oder innerhalb des Walzenbezugs angeordnet. Radial in Bezug auf die Walzengeometrie wirkende Kräfte werden in der Regel unter Verwendung piezoelektrischer oder elektromechanischer Sensoren erfasst. Beide Sensorenarten erzeugen ein elektrisches Signal, das für ihre Deformation unter den jeweiligen Druckverhältnissen repräsentativ ist. Da die Drehgeschwindigkeit der Walzen bei modernen Papiermaschinen sehr hoch ist, werden die Sensorsignalwerte vorzugsweise über Funk an externe Verarbeitungseinrichtungen übertragen.

Statt mit elektrischen Mitteln arbeitenden Sensoren können auch faseroptische Sensoren verwendet werden, bei denen die optischen Eigenschaften eines Lichtwellenleiters wie beispielsweise einer Glasfaser durch die auf den Lichtwellenleiter übertragene Verformungsspannung verändert werden. In der WO 2010/034321 A1 werden faseroptische Sensoren zur Verwendung in Walzenbezügen für Papiermaschinen beschrieben, die in Glasfasern eingeschriebene Faser-Bragg-Gitter als Sensorelemente verwenden. Faser-Bragg-Gitter sind in Lichtwellenleiter angeordnete optische Interferenzfilter, die beispielsweise mittels eines Lasers in den Lichtwellenleiter eingeschrieben werden. Wellenlängen, die innerhalb der vorgegebenen Filterbandbreite um λ_{B} liegen, werden reflektiert.

Bei der Herstellung von sog. Tissue- oder Hygienepapieren sind die Anforderungen an die Überwachung von Druck- und/oder Temperaturprofilen noch diffiziler, da sich die in Tissuemaschinen verwendeten Yankeetrockenzylinder während des laufenden Betriebs der Maschine durch diverse Einflüsse verformen. Die Verformungen schlagen sich insbesondere in den in Maschinenquerrichtung gesehen randständigen Bereichen nieder, so dass deren Überwachung besonders wichtig ist und in hoher Genauigkeit erfolgen sollte.

Es ist somit Aufgabe der Erfindung, eine Maschine zur Herstellung einer Faserstoffbahn anzugeben, welche über geeignete Maßnahmen verfügt, die eine derartige Überwachung in effizienter Weise möglich machen.

Die vorstehende Aufgabe wird durch die Merkmale des Anspruchs 1 gelöst. Bevorzugte Weiterbildungen finden sich in den Unteransprüchen.

Erfindungsgemäß ist dabei vorgesehen, dass Druck- und/oder Temperatursensoren vorgesehen sind, welche in Maschinenquerrichtung der Presswalze zumindest bereichsweise unterschiedlich weit voneinander beabstandet sind.

Gemäß der Erfindung weisen die Druck- und/oder Temperatursensoren in in Maschinenquerrichtung gesehen randständigen Bereichen der Presswalze geringere Abstände zueinander auf als in einem in Maschinenquerrichtung gesehen mittigen Bereich der Presswalze. Dadurch kann sichergestellt werden, dass die Überwachung der kritischen Randbereiche engmaschig erfolgen kann.

Gemäß der Erfindung ist die Gegenwalze ein Yankeezylinder, der während des Betriebs der Maschine zur Herstellung einer Faserstoffbahn ein zumindest abschnittsweise gebogenes, insbesondere ein zumindest abschnittsweise konkaves oder konvexes Profil in Maschinenquerrichtung aufweist.

Vorteilhafterweise können einige der Druck- und/oder Temperatursensoren als Faser-Bragg-Gitter ausgebildet sein, die auf zumindest einem Lichtwellenleiter derart angeordnet sind, dass sich Abschnitte des wenigstens einen Lichtwellenleiters, welche jeweils ein Faser-Bragg-Gitter enthalten, mit Abschnitten des wenigstens einen Lichtwellenleiters, welche frei von Faser-Bragg-Gittern sind, entlang der Erstreckung des Lichtwellenleiters abwechseln.

Bevorzugt schließen Abschnitte des wenigstens einen Lichtwellenleiters, welche jeweils ein Faser-Bragg-Gitter enthalten, mit einer Umfangsrichtung der Presswalze einen Winkel von kleiner 80° und insbesondere kleiner 60° und weiter insbesondere kleiner 45° ein. Dadurch ist sichergestellt, dass die Verformungen, welche der Walzenbezug während des Betriebs erfährt, optimal auf die Sensoren einwirken können. Zu große Winkel führen zu einer zu geringen Verformung und können somit zur Verfälschung von Messungen führen.

Gemäß einer vorteilhaften Ausgestaltung der Erfindung sind Abschnitte desselben Lichtwellenleiters, welche jeweils ein Faser-Bragg-Gitter enthalten, in Maschinenquerrichtung der Presswalze gesehen benachbart angeordnet.

Gemäß einer bevorzugten Ausgestaltungsvariante können Abschnitte desselben Lichtwellenleiters, welche jeweils ein Faser-Bragg-Gitter enthalten, in einem sich über zumindest einen Teil der Länge in Maschinenquerrichtung der Presswalze in einem sich in Maschinenquerrichtung erstreckenden Bereich angeordnet sind, dessen Erstreckung in Umfangsrichtung weniger als 15 cm und insbesondere weniger als 5 cm und weiter insbesondere weniger als 3 cm beträgt. Dadurch ist es möglich, eine Linie aus Sensoren zu bilden, die ungefähr gleichzeitig den Walzenspalt passieren und somit gleichzeitige Messungen über die gesamte Breite der Presswalze ermöglichen.

Alternativ können auch Abschnitte desselben Lichtwellenleiters, welche jeweils ein Faser-Bragg-Gitter enthalten, entlang einer auf der Oberfläche der Presswalze beschriebenen helikalen Kurve angeordnet sein, wobei eine Abweichung von der helikalen Kurve sowohl in Maschinenquerrichtung der Presswalze als auch in Umfangsrichtung der Presswalze weniger als 15 cm und insbesondere weniger als 5 cm und weiter insbesondere weniger als 3 cm beträgt.

Weiterhin kann vorteilhafterweise vorgesehen sein, dass mehrere Lichtwellenleiter vorgesehen sind, wobei benachbarte Abschnitte unterschiedlicher Lichtwellenleiter, welche Abschnitte jeweils ein Faser-Bragg-Gitter enthalten, in einem sich über den ganzen Umfang der Presswalze in Umfangsrichtung erstreckenden Bereich angeordnet sind, dessen Erstreckung in Maschinenquerrichtung der Presswalze weniger als 10 cm und insbesondere weniger als 3 cm und weiter insbesondere weniger als 3 cm beträgt. Durch diese Art der Anordnung ist ein besonders dichtes Netz aus Sensoren über die gesamte Oberfläche der Walze und eine besonders einfache Auswertung möglich, da die Signale der verschiedenen Lichtwellenleiter nicht bei jedem Durchgang durch den Walzenspalt gemessen und ausgewertet werden müssen.

Gemäß weiteren bevorzugten Aspekten der Erfindung können in Erstreckungsrichtung des zumindest einen Lichtwellenleiters beabstandete Faser-Bragg-Gitter desselben Lichtwellenleiters ausgebildet sein, Licht unterschiedlicher oder derselben Wellenlänge zu reflektieren.

Gemäß einem Aspekt der Erfindung ist wenigstens ein Ende des zumindest einen Lichtwellenleiters aus der Presswalze herausgeführt, um eine Auswerteeinheit zu kontaktieren, die die Signale der Sensoren weiterverarbeitet.

Vorteilhafterweise kann der Walzenbezug der Presswalze mehrere Schichten aufweisen, wobei der wenigstens eine Lichtwellenleiter zwischen zwei Schichten des Walzenbezugs angeordnet oder in eine der mehreren Schichten eingebettet ist. Dadurch kann je nach den Anforderungen an die Position der Presswalze und angepasst an die Beschaffenheit des Walzenbezuges eine optimale Positionierung der Sensoren erreicht werden.

Die Erfindung wird nachfolgend unter Bezugnahme auf die Figuren beispielhaft näher beschrieben. In den Figuren zeigen:
- Figur 1: eine stark schematisierte seitliche Darstellung einer Maschine zur Herstellung von Tissuepapier, welche zur Anwendung der erfindungsgemäßen Maßnahmen geeignet ist,
- Figur 2: eine stark schematisierte Ansicht einer Presswalze, welche gemäß einem ersten Ausführungsbeispiel der Erfindung gestaltet ist,
- Figur 3: eine stark schematisierte Ansicht einer Presswalze, welche gemäß einem zweiten Ausführungsbeispiel der Erfindung gestaltet ist, und
- Figur 4: eine stark schematisierte Ansicht des im Betrieb in Maschinenquerrichtung gebogenen Profils einer Presswalze und ihrer Gegenwalze.

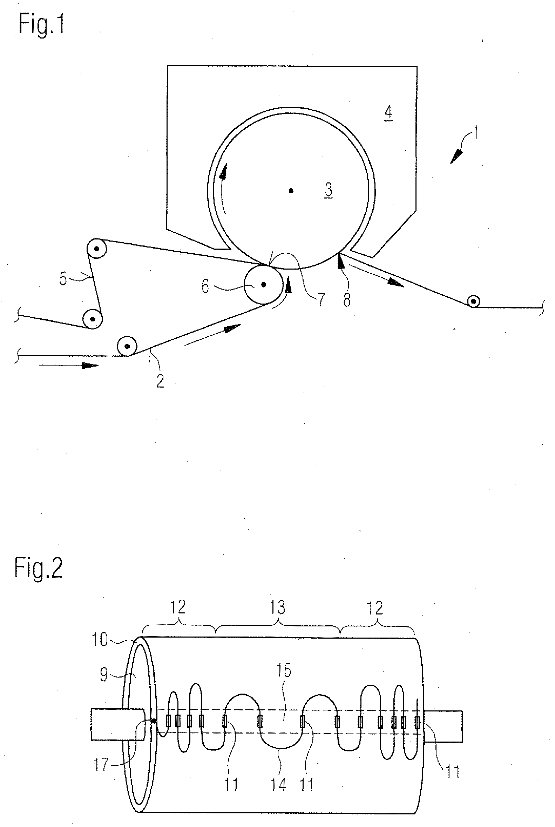

Figur 1 zeigt in einer sehr stark schematisierten seitlichen Ansicht einen Ausschnitt aus einer Maschine 1, welche zur Herstellung einer Faserstoffbahn 2 geeignet ist. Die mit dieser Art von Maschinen 1 herstellbaren Papiere werden als Hygiene- oder Tissuepapiere bezeichnet.

Die Maschine 1 umfasst einen Trockenzylinder 3, welcher gemäß gängiger Nomenklatur auch als Yankeezylinder 3 bezeichnet wird, und eine Trockenhaube 4, die den Yankeezylinder 3 zumindest teilweise umschließt. Auf die Darstellung und Beschreibung weiterer Bauteile wird aus Gründen der Übersichtlichkeit an dieser Stelle verzichtet, da derartige Maschinen 1 seit langem bekannt sind.

Die Faserstoffbahn 2 wird - aus einer in Fig. 1 nicht dargestellten Formierpartie kommend - in der in Fig. 1 mit Pfeilen gekennzeichneten Richtung auf einer Papiermaschinenbespannung 5 in Richtung auf den Yankeezylinder 3 geführt und mittels einer Presswalze 6 an den Yankeezylinder 3 übergeben. Dabei erfolgt eine Vorentwässerung der Faserstoffbahn 2, bevor diese auf dem Yankeezylinder 3 getrocknet wird. An dieser Stelle liegt das Hauptaugenmerk darauf, dass die Faserstoffbahn 2 nicht zu stark kompaktiert wird und ihren sog. Bulk nicht verliert, der für die späteren Eigenschaften des Tissuepapiers ausschlaggebend ist.

Der Yankeezylinder 3 ist von innen durch nicht näher dargestellte Maßnahmen mittels Dampf beheizbar, so dass das nach dem Durchgang durch einen Walzenspalt 7 zwischen Presswalze 6 und Yankeezylinder 3 noch in der Faserstoffbahn 2 vorhandene Wasser zum großen Teil entfernt werden kann. Die Trockenhaube 4 dient der Wärmerückhaltung im Bereich des Yankeezylinders 3, um die Trockenleistung im Verhältnis zum Energieeintrag zu verbessern.

Nach dem Trocknungsvorgang wird die Faserstoffbahn 2 mittels eines Kreppschabers 8 vom Yankeezylinder 3 abgenommen und weiter in Richtung der nicht weiter dargestellten Aufrollung geführt.

Um die Entwässerung in dem Walzenspalt 7 zwischen der Presswalze 6 und dem Yankeezylinder 3 kontrollieren und steuern zu können, ist es sinnvoll, die Druck- und/oder Temperaturverteilung im Walzenspalt 7 zu messen. Die Messung eines derartigen Druck- und/oder Temperaturprofils ist jedoch nur bei beheiztem Yankeezylinder 3 und laufender Maschine 1 möglich und sinnvoll. Dies ist darin bedingt, dass verschiedene Einflüsse während des Betriebs eine Deformation des Yankeezylinders 3 verursachen, jener also eine andere Form aufweist als im Stillstand der Maschine 1. Diese Deformation hängt u.a. von der Rotationsgeschwindigkeit, dem Dampfdruck, der Dampftemperatur und der Linienlast der Presswalze 6 ab. Insgesamt können die Abweichungen bis zu 2mm betragen, wobei in einer Maschinenquerrichtung betrachtet die Werte in den Randbereichen besonders stark variieren.

Werden die Variationen nicht kontrolliert bzw. korrigiert, kann eine Überpressung in den Randbereichen beispielsweise zu Bahnabrissen führen. Lokale Überpressungen, welche über die gesamte Breite auftreten können, können zu Problemen bei der Aufwicklung führen, da dickere und dünnere Partien der Faserstoffbahn 2 die Wicklungen ungleichmäßig machen. Abgesehen davon ist auch die Qualität des Endproduktes nicht befriedigend, wenn Dickenschwankungen aufgrund von Überpressung auftreten.

Um den beschriebenen Deformationen entgegenzuwirken, werden die im Betrieb zu erwartenden Veränderungen teilweise durch eine Vorverformung der Walzenoberflächen - sog. Bombage oder Crowning - vorweggenommen. Da jedoch der Yankeezylinder 3 während seiner Lebenszeit auch weitere Veränderungen wie beispielsweise einen Materialabtrag durch Überschleifen erfährt, können diese Vorverformungen auch nur begrenzt Wirkung zeigen.

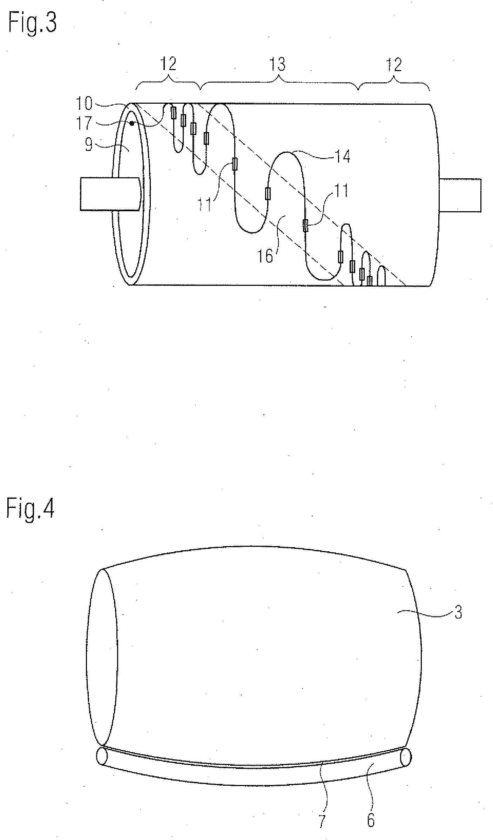

In Figur 4 ist stark schematisiert und zur Verdeutlichung überhöht die Situation zwischen der Presswalze 6 und dem Yankeezylinder 3 dargestellt. Der Yankeezylinder 3 weist eine konvexe Verformung auf. Entsprechend kann die Oberfläche der Presswalze 6 eine leicht konkave Verformung aufweisen, welche jedoch nicht in demselben Ausmaß wie die Verformung des Yankeezylinders 3 ausfällt. Dies ist dadurch begründet, dass der Walzenbezug 10 der Presswalze 6 zwar als elastischer Bezug ausgebildet ist, die Presswalze jedoch nicht bombiert ausgeführt ist. Entsprechend sieht die Presswalze 6 in Maschinenquerrichtung gesehen in einem mittigen Bereich 13 einen höheren Druck als in randständigen Bereichen 12, so dass es wünschenswert ist, die Überwachung der randständigen Bereiche 12 zu verstärken.

Dementsprechend ist es wünschenswert, die Druck- und/oder Temperaturverhältnisse im Walzenspalt 7 zwischen Yankeezylinder 3 und Presswalze 6 im Betrieb unter Beobachtung zu halten und hierbei besonderes Augenmerk auf die randständigen Bereiche 12 zu legen.

Erfindungsgemäß ist dabei vorgesehen, dass die Presswalze 6 mit geeigneten Sensoren 11 versehen ist, die es ermöglichen, den Druck und/oder die Temperatur im Walzenspalt 7 laufend zu überwachen.

In den Figuren 2 und 3 sind beispielhaft Presswalzen 6 dargestellt, welche mit mehreren Sensoren 11 zur Messung von Druck und/oder Temperatur bestückt sind.

Gewöhnlich wird an der betrachteten Position der Presswalze 6 eine Walze mit einem elastischen Walzenbezug 10, der auf einem harten Walzenkern 9 aufgebracht ist, vorgesehen. Als Materialien für den Walzenbezug 10 sind beispielsweise Gummi oder Polyurethan geeignet, während der Walzenkern 9 beispielsweise aus Metall oder einem Faserverbundwerkstoff bestehen kann. Der Walzenbezug 10 ist weich gehalten, um den Bulk der Faserstoffbahn 2 zu erhalten.

Die Sensoren 11 sind bevorzugt in Form von Faser-Bragg-Sensoren ausgebildet. Hierbei werden in einen Lichtwellenleiter 14 sogenannte Bragg-Gitter eingeschrieben, welche jeweils für festgelegte Wellenlängen reflektierend wirken, wenn Licht durch den Lichtwellenleiter 14 übertragen wird. Der Lichtwellenleiter 14 ist gewöhnlich eine Glasfaser.

Betrachtet man Figur 2, so ist ersichtlich, dass ein Lichtwellenleiter 14 vorgesehen ist, welcher an definierten Positionen Sensoren 11 aufweist. Die Sensoren 11 müssen aufgrund ihrer Charakteristik im Wesentlichen in einer Umfangsrichtung der Presswalze 6 ausgerichtet sein. Ein Winkel zwischen der Längserstreckung der Sensoren 11 und der Umfangsrichtung sollte unter 80°, bevorzugt unter 60°, besonders bevorzugt unter 45° betragen.

Der Lichtwellenleiter 14 ist aus diesem Grund mäandrierend verlegt, da Glasfasern gewöhnlich zwar sehr hohe Zugkräfte aushalten, aber nicht unter zu kleinen Radien gebogen werden dürfen. Die mäandrierende Verlegung ist in Figur 2 gut erkennbar.

Wie weiterhin erkennbar ist, sind die Sensoren 11 in einem Bereich 15 angeordnet, welcher sich im Wesentlichen über die Breite der Presswalze 6 erstreckt und eine Ausdehnung von weniger als 15cm, bevorzugt weniger als 5cm, besonders bevorzugt weniger als 3 cm beträgt. Die Sensoren 11 sind somit im Wesentlichen auf einer Linie angeordnet.

Erfindungsgemäß sind die Sensoren in den randständigen Bereichen 12 gegenüber dem mittigen Bereich 13 unterschiedlich weit voneinander beabstandet. Wie aus Figur 2 ersichtlich, sind dabei die Abstände zwischen den einzelnen Sensoren 11 in den randständigen Bereichen 12 kleiner als im mittigen Bereich 13. Dadurch ist eine enge Überwachung der Drücke und/oder Temperaturen in den randständigen Bereichen 12 gewährleistet. Im mittigen Bereich 13 können die Abstände der Sensoren 11 zueinander etwas weiter gewählt sein, da in diesem Bereich die oben genannten Verformungen des Yankeezylinders 3 nicht so stark ausgeprägt bzw. durch Bombage und Crowning teilweise ausgeglichen sind.

Die Sensoren 11 sind dabei im Wesentlichen über die ganze Breite der Faserstoffbahn 2 und bevorzugt über die gesamte Breite des Walzenbezuges 10 ausgebildet. Zusätzlich können auch noch Sensoren 11 im Bereich einer sogenannten Randfreistellung, wo die radiale Dicke des Walzenbezuges 10 abnimmt, vorgesehen sein, um bei wandernder Faserstoffbahn 2 Messwerte zu erhalten.

In Figur 3 ist ein weiteres Ausführungsbeispiel der erfindungsgemäßen Maßnahmen dargestellt. Hier ist der Lichtwellenleiter 14 in einer helikalen Form angeordnet, welche sich über die gesamte Fläche des Walzenbezuges 10 erstrecken kann. Es können auch mehrere Windungen vorgesehen sein. Die Sensoren 11 sind jedoch wiederum, wie bereits in Figur 2 beschrieben, in einem engen Bereich 16 ähnlicher Dimensionierung wie in Figur 2 angeordnet und liegen im Wesentlichen auf einer Linie. Auch ihre Ausrichtung gegenüber der Umfangsrichtung der Presswalze 6 folgt den gleichen Anforderungen.

Es ist weiterhin möglich, nicht nur einen, sondern mehrere Lichtwellenleiter 14 vorzusehen, die über die Fläche der Presswalze 6 verteilt angeordnet sein können. Diese können entweder wie in Figur 2 in Maschinenquerrichtung im Wesentlichen parallel zur Richtung der Walzenachse angeordnet sein oder wie in Figur 3 in Form von helikalen Windungen. Es ist beispielsweise denkbar, eine Anzahl von vier Lichtwellenleitern 14 vorzusehen, die in gleichmäßigen Abständen von 90° zueinander rund um die Presswalze 6 angeordnet sein können.

Die Bragg-Gitter können dabei je nach Anforderung für gleiche oder unterschiedliche Wellenlängen reflektierend sein. Werden mehrere Lichtwellenleiter 14 verlegt, können beispielsweise unterschiedliche Wellenlängen für jeden der Lichtwellenleiter 14 gewählt werden, um die Auswertung zu vereinfachen.

Die Anordnung der Lichtwellenleiter 14 erfolgt bevorzugt zwischen dem Walzenkern 9 und dem Walzenbezug 10 oder auch zwischen verschiedenen Schichten des Walzenbezuges 10, wenn dieser mehrere Schichten vorsieht, oder auch eingebettet in eine Schicht.

Zumindest ein Ende 17 des zumindest einen Lichtwellenleiters 14 ist aus der Presswalze 6 herausgeführt und mit einer nicht weiter dargestellten Auswertungseinheit verbunden.

## Patentansprüche

1. Maschine (1) zur Herstellung und/oder Verarbeitung einer Faserstoffbahn (2), insbesondere einer Tissuebahn, mit einer Presswalze (6) und einer mit der Presswalze (6) einen Walzenspalt (7) bildenden Gegenwalze (3), die als Yankeezylinder (3) ausgeführt ist, wobei deren Mantelfläche eine in Maschinenquerrichtung verlaufende Kontur hat, die sich beim Betrieb der Maschine (1) gegenüber dem Stillstand der Maschine (1) verändert, und wobei die Presswalze (6) einen Walzenkern (9) und einen den Walzenkern (9) umgebenden Walzenbezug (10) aufweist und in dem Walzenbezug (10) und/oder zwischen Walzenkern (9) und Walzenbezug (10) mehrere Druck- und/oder Temperatursensoren (11) angeordnet sind, wobei die Gegenwalze von innen mittels Dampf beheizt ist, und die Kontur der Gegenwalze (3) im Betrieb in Maschinenquerrichtung betrachtet zumindest abschnittweise gebogen, insbesondere zumindest abschnittweise konkav oder konvex ist, und die Druck- und/oder Temperatursensoren (11) in Maschinenquerrichtung der Presswalze (6) zumindest bereichsweise unterschiedlich weit voneinander beabstandet sind wobei die Druck- und/oder Temperatursensoren (11) in Maschinenquerrichtung gesehen randständigen Bereichen (12) der Presswalze (6) geringere Abstände zueinander aufweisen als in einem in Maschinenquerrichtung gesehen mittigen Bereich (13) der Presswalze (6).

2. Maschine nach Anspruch 1, **dadurch gekennzeichnet, dass** zumindest einige der Druck- und/oder Temperatursensoren (11) als Faser-Bragg-Gitter ausgebildet sind, die auf zumindest einem Lichtwellenleiter (14) derart angeordnet sind, dass sich Abschnitte des wenigstens einen Lichtwellenleiters (14), welche jeweils ein Faser-Bragg-Gitter enthalten, mit Abschnitten des wenigstens einen Lichtwellenleiters (14), welche frei von Faser-Bragg-Gittern sind, entlang der Erstreckung des Lichtwellenleiters (14) abwechseln.

3. Maschine nach Anspruch 2, **dadurch gekennzeichnet, dass** Abschnitte des wenigstens einen Lichtwellenleiters (14), welche jeweils ein Faser-Bragg-Gitter enthalten, mit einer Umfangsrichtung der Presswalze (6) einen Winkel von kleiner 80° und insbesondere kleiner 60° und weiter insbesondere kleiner 45° einschließen.

4. Maschine nach Anspruch 2 oder 3, **dadurch gekennzeichnet, dass** die Abstände zwischen den Abschnitten desselben Lichtwellenleiters (14), welche jeweils ein Faser-Bragg-Gitter enthalten, in den in Maschinenquerrichtung gesehen randständigen Bereichen (12) zumindest bereichsweise mit zunehmender Entfernung von dem in Maschinenquerrichtung gesehen mittigen Bereich (13) der Presswalze (6) abnehmen.

5. Maschine nach einem der Ansprüche 2 bis 4, **dadurch gekennzeichnet, dass** Abschnitte desselben Lichtwellenleiters (14), welche jeweils ein Faser-Bragg-Gitter enthalten, in Maschinenquerrichtung der Presswalze (6) gesehen benachbart angeordnet sind.

6. Maschine nach einem der Ansprüche 2 bis 5, **dadurch gekennzeichnet, dass** Abschnitte desselben Lichtwellenleiters (14), welche jeweils ein Faser-Bragg-Gitter enthalten, in einem sich über zumindest einen Teil der Länge in Maschinenquerrichtung der Presswalze (6) in einem sich in Maschinenquerrichtung erstreckenden Bereich (15) angeordnet sind, dessen Erstreckung in Umfangsrichtung weniger als 15 cm und insbesondere weniger als 5 cm und weiter insbesondere weniger als 3 cm beträgt.

7. Maschine nach einem der Ansprüche 2 bis 5, **dadurch gekennzeichnet,**
**dass** Abschnitte desselben Lichtwellenleiters (14), welche jeweils ein Faser-Bragg-Gitter enthalten, entlang einer auf der Oberfläche der Presswalze (6) beschriebenen helikalen Kurve (16) angeordnet sind, wobei eine Abweichung von der helikalen Kurve sowohl in Maschinenquerrichtung der Presswalze (6) als auch in Umfangsrichtung der Presswalze (6) weniger als 15 cm und insbesondere weniger als 5 cm und weiter insbesondere weniger als 3 cm beträgt.

8. Maschine nach einem der Ansprüche 2 bis 7, **dadurch gekennzeichnet,**
**dass** in Erstreckungsrichtung des zumindest einen Lichtwellenleiters (14) beabstandete Faser-Bragg-Gitter desselben Lichtwellenleiters (14) ausgebildet sind, Licht unterschiedlicher Wellenlänge zu reflektieren.

9. Maschine nach einem der Ansprüche 2 bis 7, **dadurch gekennzeichnet,**
**dass** in Erstreckungsrichtung des zumindest einen Lichtwellenleiters (14) beabstandete Faser-Bragg-Gitter desselben Lichtwellenleiters ausgebildet sind, Licht derselben Wellenlänge zu reflektieren.

10. Maschine nach einem der Ansprüche 2 bis 9, **dadurch gekennzeichnet, dass** wenigstens ein Ende (17) des zumindest einen Lichtwellenleiters (14) aus der Presswalze (6) herausgeführt ist.

11. Maschine nach einem der Ansprüche 2 bis 10, **dadurch gekennzeichnet, dass** der Walzenbezug (10) mehrere Schichten aufweist und der wenigstens eine Lichtwellenleiter (14) zwischen zwei Schichten des Walzenbezugs (10) angeordnet oder in eine der mehreren Schichten eingebettet ist.

## Claims

1. Machine (1) for producing and/or processing a fibrous web (2), in particular a tissue web, having a press roller (6) and a counter roller (3) that conjointly with the press roller (6) forms a roller nip (7) and is embodied as a Yankee cylinder (3), wherein the shell area of said counter roller (3) has a contour that runs in the cross-machine direction and in the operation of the machine (1) is modified in comparison to the idle state of the machine (1), and wherein the press roller (6) has a roller core (9) and a roller covering (10) that surrounds the roller core (9), and a plurality of pressure and/or temperature sensors (11) are disposed in the roller covering (10) and/or between the roller core (9) and the roller covering (10), wherein the counter roller is heated from the inside by means of steam, and the contour of the counter roller (3) when viewed in operation in the cross-machine direction at least in portions is curved, in particular at least in portions is concave or convex, and the pressure and/or temperature sensors (11) in the cross-machine direction of the press roller (6) at least in regions are spaced apart by dissimilar distances, wherein the pressure and/or temperature sensors (11) in peripheral regions (12) of the press roller (6) when viewed in the cross-machine direction have a tighter mutual spacing than in a central region (13) of the press roller (6) when viewed in the cross-machine direction.

2. Machine according to Claim 1, **characterized in that** at least some of the pressure and/or temperature sensors (11) are configured as fibre Bragg gratings which on at least one optical fibre (14) are disposed in such a manner that portions of the at least one optical fibre (14) that in each case include one fibre Bragg grating alternate along the extent of the optical fibre (14) with portions of the at least one optical fibre (14) that are free from fibre Bragg gratings.

3. Machine according to Claim 2, **characterized in that** portions of the at least one optical fibre (14) which in each case contain one fibre Bragg grating in relation to a circumferential direction of the press roller (6) enclose an angle of less than 80° and particularly less than 60° and furthermore particularly less than 45°.

4. Machine according to Claim 2 or 3, **characterized in that** the spacings between the portions of the same optical fibre (14) which in each case contain one fibre Bragg grating in the peripheral regions (12) when viewed in the cross-machine direction at least in portions decrease as the distance from the central region (13) of the press roller (6) when viewed in the cross-machine direction increases.

5. Machine according to one of Claims 2 to 4, **characterized in that** portions of the same optical fibre (14) which in each case contain one fibre Bragg grating are disposed so as to be neighbouring when viewed in the cross-machine direction of the press roller (6).

6. Machine according to one of Claims 2 to 5, **characterized in that** portions of the same optical fibre (14) which in each case contain one fibre Bragg grating are disposed in a region (15) that extends across at least part of the length of the press roller (6) in the cross-machine direction, in a that in the cross-machine direction the extent of said region (15) in the circumferential direction being less than 15 cm and particularly less than 5 cm and furthermore particularly less than 3 cm.

7. Machine according to one of Claims 2 to 5, **characterized in that** portions of the same optical fibre (14) which in each case contain one fibre Bragg grating are disposed along a helical curve (16) that is defined on the surface of the press roller (6), wherein any deviation from the helical curve both in the cross-machine direction of the press roller (6) and in the circumferential direction of the press roller (6) is less than 15 cm and particularly less than 5 cm and furthermore particularly less than 3 cm.

8. Machine according to one of Claims 2 to 7, **characterized in that** fibre Bragg gratings of the same optical fibre (14) that are spaced apart in the direction of extent of the at least one optical fibre (14) are configured to reflect light of dissimilar wavelengths.

9. Machine according to one of Claims 2 to 7, **characterized in that** fibre Bragg gratings of the same optical fibre that are spaced apart in the direction of extent of the at least one optical fibre (14) are configured to reflect light of the same wavelength.

10. Machine according to one of Claims 2 to 9, **characterized in that** at least one end (17) of the at least one optical fibre (14) is routed out of the press roller (6).

11. Machine according to one of Claims 2 to 10, **characterized in that** the roller covering (10) has a plurality of layers, and the at least one optical fibre (14) is disposed between two layers of the roller covering (10) or is embedded in one of the plurality of layers.

## Revendications

1. Machine (1) pour la production et/ou le traitement d'une bande de matière fibreuse (2), en particulier d'une bande d'essuie-tout, avec un rouleau de pression (6) et un rouleau opposé (3), qui est réalisé en forme de cylindre frictionneur (3) et qui forme avec le rouleau de pression (6) une emprise (7), dans laquelle sa surface latérale présente un contour s'étendant dans la direction transversale de la machine qui change lors du fonctionnement de la machine (1) par rapport à l'arrêt de la machine (1), et dans laquelle le rouleau de pression (6) présente un noyau de rouleau (9) et une enveloppe de rouleau (10) entourant le noyau de rouleau (9) et plusieurs capteurs de pression et/ou de température (11) sont disposés dans l'enveloppe de rouleau (10) et/ou entre le noyau de rouleau (9) et l'enveloppe de rouleau (10), dans laquelle le rouleau opposé est chauffé par l'intérieur au moyen de vapeur, et le contour du rouleau opposé (3) en fonctionnement, considéré dans la direction transversale de la machine, est au moins localement courbe, en particulier au moins localement concave ou convexe, et les capteurs de pression et/ou de température (11) dans la direction transversale de la machine du rouleau de pression (6) sont au moins localement espacés différemment l'un de l'autre, dans laquelle les capteurs de pression et/ou de température (11) présentent dans des régions de bord (12) du rouleau de pression (6) en considérant la direction transversale de la machine des distances plus petites l'un par rapport à l'autre que dans une région centrale (13) du rouleau de pression (6) considéré dans la direction transversale de la machine.

2. Machine selon la revendication 1, **caractérisée en ce qu'**au moins quelques-uns des capteurs de pression et/ou de température (11) sont réalisés sous forme de réseau de Bragg à fibre, qui sont disposés sur au moins un guide d'ondes lumineuses (14), de telle manière que des sections dudit au moins un guide d'ondes lumineuses (14), qui contiennent respectivement un réseau de Bragg à fibre, alternent avec des sections dudit au moins un guide d'ondes lumineuses (14), qui sont dépourvues de réseaux de Bragg à fibre, le long de l'extension du guide d'ondes lumineuses (14).

3. Machine selon la revendication 2, **caractérisée en ce que** des sections dudit au moins un guide d'ondes lumineuses (14), qui contiennent respectivement un réseau de Bragg à fibre, forment avec une direction périphérique du rouleau de pression (6) un angle inférieur à 80° et en particulier inférieur à 60° et de préférence encore inférieur à 45°.

4. Machine selon la revendication 2 ou 3, **caractérisée en ce que** les distances entre les sections du même guide d'ondes lumineuses (14), qui contiennent respectivement un réseau de Bragg à fibre, dans les régions de bord (12) considérées dans la direction transversale de la machine, diminuent au moins localement avec l'augmentation de l'éloignement de la région centrale (13) du rouleau de pression (6) considéré dans la direction transversale de la machine.

5. Machine selon l'une quelconque des revendications 2 à 4, **caractérisée en ce que** des sections du même guide d'ondes lumineuses (14), qui contiennent respectivement un réseau de Bragg à fibre, sont disposées de façon voisine, considérées dans la direction transversale de la machine.

6. Machine selon l'une quelconque des revendications 2 à 5, **caractérisée en ce que** des sections du même guide d'ondes lumineuses (14), qui contiennent respectivement un réseau de Bragg à fibre, sont disposées dans une région (15) s'étendant sur au moins une partie de la longueur dans la direction transversale de la machine du rouleau de pression (6) dans une dans la direction transversale, dont l'extension dans la direction périphérique vaut moins de 15 cm et en particulier moins de 5 cm et de préférence encore moins de 3 cm.

7. Machine selon l'une quelconque des revendications 2 à 5, **caractérisée en ce que** des sections du même guide d'ondes lumineuses (14), qui contiennent respectivement un réseau de Bragg à fibre, sont disposées le long d'une courbe hélicoïdale (16) tracée sur la surface du rouleau de pression (6), dans laquelle un écart de la courbe hélicoïdale aussi bien dans la direction transversale de la machine du rouleau de pression (6) que dans la direction périphérique du rouleau de pression (6) vaut moins de 15 cm et en particulier moins de 5 cm et de préférence encore moins de 3 cm.

8. Machine selon l'une quelconque des revendications 2 à 7, **caractérisée en ce que** des réseaux de Bragg à fibre du même guide d'ondes lumineuses (14) espacés dans la direction d'extension dudit au moins un guide d'ondes lumineuses (14) sont réalisés de façon à réfléchir une lumière de différentes longueurs d'onde.

9. Machine selon l'une quelconque des revendications 2 à 7, **caractérisée en ce que** des réseaux de Bragg à fibre du même guide d'ondes lumineuses (14) espacés dans la direction d'extension dudit au moins un guide d'ondes lumineuses (14) sont réalisés de façon à réfléchir une lumière de la même longueur d'onde.

10. Machine selon l'une quelconque des revendications 2 à 9, **caractérisée en ce qu'**au moins une extrémité (17) dudit au moins un guide d'ondes lumineuses (14) est menée hors du rouleau de pression (6).

11. Machine selon l'une quelconque des revendications 2 à 10, **caractérisée en ce que** l'enveloppe de rouleau (10) présente plusieurs couches et ledit au moins un guide d'ondes lumineuses (14) est disposé entre deux couches de l'enveloppe de rouleau (10) ou est logé dans une des multiples couches.
